# EUROPEAN PATENT APPLICATION

(11) **EP 3 363 299 A1**
(43) Date of publication of application: **22.08.2018**
(21) Application number: 17382076.2
(22) Date of filing: 16.02.2017
(51) Int. Cl.: A23L 13/00, A23L 5/10, A23L 29/281, A23P 30/38, A23L 13/10

(54) **METHOD FOR MANUFACTURING LIGHT SNACKS OF CRISPY TEXTURE, DEHYDRATED PORTIONS FOR OBTAINING SUCH LIGHT SNACK AND THE LIGHT SNACK OBTAINED THEREOF**

(71) Applicant: Metalquimia, S.A.U., 17007 Girona (ES)
(72) Inventor: LAGARES GAMERO, Josep, 17850 Besalú (ES)
(74) Representative: Juncosa Miró, Jaime

(57) **Abstract**

The invention relates to a method for manufacturing lightweight snacks with a crunchy texture, dehydrated portions for obtaining said lightweight snack and the lightweight snack obtained. Said invention proposes mixing a starch-free gelatinous coagulating product with thermoreversible coagulation properties that can melt at a threshold temperature with at least one flavoring product, inducing coagulation of the gelatinous coagulating product and shaping portions of said coagulated product that is less than 4 mm thick, drying said portions by means of treated air at a temperature lower than the threshold temperature, provided by a treatment unit for treating by means of treated air, obtaining dehydrated portions and frying the dehydrated portions, obtaining a lightweight snack with a crunchy texture.

## Description

### Field of the Art

The present invention relates to the field of methods for manufacturing lightweight snacks with a crunchy texture, dehydrated portions for obtaining said snack and the lightweight snacks obtained. A snack is understood to be a small amount of foodstuff eaten to assuage incipient hunger, to recover strength, or as an appetizer, in this case the expression "lightweight snack" refers to a low-density and light-weight food containing air therein trapped in small bubbles that reduce the weight but increase the volume thereof. The adjective "crunchy" refers to the fact that these lightweight snacks break apart when bitten into, making a crunching sound.

### Prior Art

Lightweight snacks with a crunchy texture are known, such as for example the products popularly known as shrimp crackers, or Frit Ravich Ganchitos^{(C)} or Frito Lay Cheetos^{(C)} brand name snacks.

So-called shrimp crackers are a snack derived from a traditional Malaysian and Indonesian dish called "keropok", and they are prepared from a tapioca or potato paste flavored with fish, shrimp or vegetables, dried and then fried. Traditionally they were dried in the sun, but today this process is done by means of industrial ovens as a result of the gelling coagulating product used not being thermoreversible and therefore not returning to a liquid state when heated during the drying process.

Snacks called Ganchitos^{(C)} or Cheetos^{(C)} are very similar products made from corn flour, but instead of frying them, they were originally baked without oil. Today they are compressed and extruded, causing sudden expansion of the air contained therein and the hardening thereof, obtaining the lightweight and crunchy texture.

Vegetable starch is the base in all these products and it acts like a gelatinous binder when hydrated, which allows making a paste that can later be dried or cooked, causing water to evaporate and expand, causing swelling of the product and solidification thereof, achieving the lightweight and crunchy texture. The gelling property of starch in an irreversible process allows the cooking or drying thereof with prolonged heat without causing it to melt; however, many products containing starch are not suitable for celiac patients, and all of them have a high carbohydrate content.

Patent document EP0603879A2 is also known, disclosing a foodstuff containing a mixture of a non-cohesive product with a cohesive product selected from alginic acid, alginates and glucomannan, envisaged to then be fried. In this case, the main component of the foodstuff is the non-cohesive product, the cohesive product serving as a binder to give consistency to the product as a whole and to allow the frying thereof without breaking apart. Furthermore, in this case the cohesive product is proposed to be a gelatinous coagulating product extracted from algae, which are typically irreversible gels gelling in the presence of calcium ions, but they do not reverse their gelled state according to temperature. Furthermore, this patent document does not refer to obtaining a lightweight texture.

Patent document ES2008834A6 discloses a product that is very similar to the aforementioned product, also using irreversible gelling agents such as sodium alginate and guar gum.

Patent document US4880654A discloses a meat substitute product imitating the texture and consistency of meat and obtained from a mixture of alginate with calcium ions, by way of a gelling coagulating product, with which a protein and/or starch are mixed. The mixing, kneading and beating of the product during gelling produces a texture resembling flakes of meat, which can subsequently be drained and cooked, for example, by means of frying. This patent document does not contemplate drying the obtained product before cooking it, nor does it allow obtaining a lightweight texture. In this patent document, the added protein is only used for nutritional purposes and for changing the texture of the alginate gelatin, but not as a gelling agent.

In these cases, gelling requires adding calcium ions or other alkaline agents, which may affect the flavor of the obtained product.

The use of konnyaku (gelatin obtained from an Asian flower) as a gelatinous coagulating product, which requires adding an alkaline agent for gelling, is known for solving this problem through patent document US5173321A. Acidic agents encapsulated by a hot-melt coating are incorporated in the mixture. This coating prevents the acidic agents from neutralizing the alkaline agent before causing gelling, while at the same time allowing the release of the acidic agents by means of heating the obtained gel, said acidic agents subsequently neutralizing the alkaline agents.

### Brief Description of the Invention

According to a first aspect, the present invention relates to a method for manufacturing lightweight snacks with a crunchy texture.

A snack is understood to be a small amount of foodstuff eaten to assuage incipient hunger, to recover strength or as an appetizer; in this case, the expression "lightweight snack" refers to low-density and light-weight food containing air therein trapped in small bubbles that reduce the weight but increase the volume thereof. The adjective "crunchy" refers to the fact that these lightweight snacks break apart when bitten into, making a crunching sound.

The proposed method includes the following steps:
a) mixing a gelatinous coagulating product with at least one flavoring product;
b) inducing coagulation of the gelatinous coagulating product during or after step a), obtaining a coagulated product;
c) shaping portions of said coagulated product that is less than 4 mm thick by means of a process of cutting, rolling out, die-cutting and/or smoothening out said coagulated product;
d) drying said portions, obtaining dehydrated portions;
e) frying the dehydrated portions, obtaining a lightweight snack with a crunchy texture.

Said gelatinous coagulating product will be a product with solidification capacity, forming a neutral-flavored paste or gelatin, whereas the flavoring product will be a product chosen to be mixed into the gelatinous coagulating product due to its strong flavor, giving a certain flavor to it as a whole.

The coagulation will solidify the mixture of both products in the form of gelatin, from which portions may be shaped having a size suitable for the rapid and uniform drying and frying thereof, for example less than 4 mm thick.

Drying the portions reduces their water content, which allows obtaining the crunchy texture when fried, and which allows accelerating the cooking thereof since the weight is reduced, which allows much faster and more homogenous heating while cooking.

According to a first aspect, the proposed invention proposes for said gelatinous coagulating product to be a starch-free product with thermoreversible coagulation properties that can melt at a threshold temperature, said gelatinous coagulating product representing more than half the dry weight of the dehydrated portions before being fried, preferably more than 75% of the dry weight of the dehydrated portions before being fried.

The invention also proposes performing step b) of inducing coagulation by means of controlling the temperature of the mixture of gelatinous coagulating product and flavoring product, inducing a temperature lower than the threshold temperature.

The invention proposes step d) of drying the portions including the following sub-steps:
- introducing the portions in a treatment unit for treating by means of treated air;
- subjecting said portions to a treated air flow by means of said treatment unit for treating by means of treated air, with the velocity, temperature and humidity thereof controlled for a certain time period until obtaining said dehydrated portions with a pre-established water content, the temperature of the treated air being lower than the threshold temperature at which the gelatinous coagulating product melts.

The use of a gelling coagulating product representing more than half the dry weight and not containing starch allows reducing the carbohydrate content of the obtained snack as well as increasing its protein content.

Furthermore, the thermoreversible gelling coagulating product will be in liquid or solid state depending on its temperature and will not require adding calcium ions or other alkaline agents for inducing coagulation or gelling, which additives may alter the flavor of the resulting snack.

The use of these thermoreversible gelling coagulating products will require a drying process that does not cause it to return to the liquid state, so said drying process must be a low-temperature drying process, below the threshold temperature after which gelatin dissolves. Therefore, a drying process for drying by means of treated air is proposed, said process supplying a low-humidity air flow to the portions, causing them to dry, until reaching a desired degree of humidity. The treated air must have a temperature lower than the threshold temperature in order to assure that said drying treatment does not dissolve the portions.

Said treatment for treating by means of air will require introducing the portions into the treatment unit for treating by means of air spread out on a conveyor surface, such as a modular conveyor belt or a perforated tray, forming a single layer to assure maximum exposure to said treated air flow.

According to another proposed embodiment, the gelatinous coagulating product is selected from gelatin, protein or collagen.

Said pre-established water content of the dehydrated portions will preferably be a value comprised between 5% and 25%, preferably between 10% and 20%. With a higher degree of humidity, the frying process may not be homogenous, or it may not provide a snack with a crunchy texture, in addition to the product shelf life being reduced, even making refrigeration necessary.

Said step e) of frying the dehydrated portions is alternatively proposed to take place during a cooking time lasting less than 15 seconds and to take place in oil at a regulated temperature sufficient for causing, in said cooking time, an increase in the volume of the dehydrated portions between 75% and 400%.

The cooking temperature will preferably be between 170°C and 210°C. Said temperature is much higher than the threshold temperature, but the sudden change in temperature causes the sudden evaporation of the water contained in the dehydrated portions, causing said portions to expand, while at the same time the cooking of the product takes place, causing said product to solidify, which provides the crunchy texture, all before the gelatinous coagulating product melts.

The dehydrated portions obtained after step e) will preferably be stored at room temperature and hermetically packaged for a time period before performing step e). In other words, the dehydrated portions can be stored in hermetic conditions that prevent them from rehydrating for a time that is considered appropriate before frying them. This allows for better regulation of stock and for adapting production to distribution needs, thereby achieving a lightweight snack that is recently fried before being distributed.

According to another embodiment, the gelatinous coagulating product and/or the flavoring product are stored, before being mixed, in the form of hermetically packaged dehydrated powder, and the method includes hydrating said powder before, while or after mixing the gelatinous coagulating product and the mentioned at least one flavoring product corresponding to step a) of the method. This feature allows also regulating the rate of production and of reception of the raw material by means of the storage thereof, which allows for better adapting the production to other needs unrelated to raw material supply needs.

The flavoring product is proposed to be a natural or artificial product providing one or more flavors selected from: meat, smoked meat, bacon, belly pork, fried pork rind, cheese, fish, surimi, algae, potato, sweet potato, carrot, onion, popcorn, dried fruit and nut, mushroom, salt, spice or condiment flavor.

According to a second aspect, the present invention relates to a lightweight snack with a crunchy texture including a mixture of at least one flavoring product with a gelatinous coagulating product, said mixture being in a coagulated and dehydrated state, obtaining dehydrated portions, and then being fried. In other words, the snack is the result of frying dehydrated portions resulting from dehydrating a coagulated mixture of a gelatinous coagulating product with at least one flavoring product.

The second aspect of the invention proposes for said gelatinous coagulating product to be a starch-free product with thermoreversible coagulation properties that can melt at a threshold temperature, said gelatinous coagulating product representing more than half the dry weight of the dehydrated portions. Said dehydrated portions are also proposed to be obtained through a dehydration process for dehydrating by means of a treated air flow, with the velocity, temperature and humidity thereof controlled for a certain time period until obtaining said dehydrated portions with a pre-established water content, the temperature of the treated air being lower than the threshold temperature at which the gelatinous coagulating product melts.

A snack obtained from a thermoreversible gelatinous coagulating product dehydrated by means of a treatment process for treating by means of air and subsequent frying thereof is therefore proposed.

According to another embodiment, the gelatinous coagulating product will be selected from gelatin, protein or collagen.

The flavoring product will preferably be a natural or artificial product providing one or more flavors selected from: meat, smoked meat, bacon, belly pork, fried pork rind, cheese, fish, surimi, algae, potato, sweet potato, carrot, onion, popcorn, dried fruit and nut, mushroom, salt, spice or condiment flavor.

Said snack will preferably be obtained according to the method described in relation to the first aspect of the invention.

According to a third aspect of the present invention, said invention relates to dehydrated portions for obtaining a lightweight snack with a crunchy texture by means of the frying thereof including a mixture of at least one flavoring product with a gelatinous coagulating product, said mixture being in a coagulated and dehydrated state, obtaining said dehydrated portions.

As is proposed, said gelatinous coagulating product is a starch-free product with thermoreversible coagulation properties that can melt at a threshold temperature, said gelatinous coagulating product representing more than half the dry weight of the dehydrated portions;
said dehydrated portions being obtained through a dehydration process for dehydrating by means of a treated air flow, with the velocity, temperature and humidity thereof controlled for a certain time period until obtaining said dehydrated portions with a pre-established water content, the temperature of the treated air being lower than the threshold temperature at which the gelatinous coagulating product melts.

Preferably, the gelatinous coagulating product is selected from gelatin, protein or collagen, and/or the flavoring product is a natural or artificial product providing one or more flavors selected from: meat, smoked meat, bacon, belly pork, fried pork rind, cheese, fish, surimi, algae, potato, sweet potato, carrot, onion, popcorn, dried fruit and nut, mushroom, salt, spice or condiment flavor.

Said dehydrated portions are preferably obtained according to the method described in reference to the first aspect of the present invention.

As will be understood, other additives can be added to the initial mixture, such as for example colorants, preservatives, acidifiers, aromas, flavor enhancers, spices, salt, etc.

It will also be understood that any range of values offered may not be optimal at the end values of the range and may require adapting the invention so that said end values are applicable, said adaptations being within reach of a person skilled in the art.

Other features of the invention will become apparent in the following detailed description of an embodiment.

### Detailed Description of an Embodiment

Embodiments of the present invention will be described below with an illustrative and non-limiting character.

According to a first embodiment, a dehydrated pig gelatin powder, in the form of a gelatinous coagulating product, is mixed with pork rind flour, in the form of the flavoring product, the dehydrated pig gelatin powder making up most of the dry weight of the mixture. Other additives can be added, such as colorants, preservatives, aromas, flavor enhancers, spices, salt, etc.

The mixture is heated and hydrated above the threshold melting temperature of the pig gelatin, obtaining a liquid mixture.

The liquid mixture is then poured into molds in the form of tubes that are 2 cm in diameter, and the molds are cooled below the threshold coagulation temperature of the gelatinous coagulating product, obtaining a coagulated product.

Said coagulated product is then removed from the mold and cut into slices that are 1 mm thick, obtaining portions which are deposited on a modular conveyor belt or on perforated trays forming a single layer, to then be introduced into a treatment unit for treating by means of air in which the portions are subjected to a treated air flow to dehydrate them. Said treated air flow will be regulated at a temperature lower than the threshold melting temperature of the gelatinous coagulating product.

Said treatment for treating by means of air flow is maintained until the water content of the portions reaches 20%, a 50% weight reduction of the portions taking place during the step for drying.

The obtained dehydrated portions can be stored without refrigeration in a hermetic container that prevents them from rehydrating, frozen or immediately cooked.

The dehydrated portions are cooked by means of frying them in oil. Said dehydrated portions are proposed to be immersed in oil with a temperature comprised between 180°C and 200°C for a maximum time of 15 seconds.

In the event of using oil at 180°C, a 325% expansion of the dehydrated portions takes place, whereas by using oil at 200°C a 370% expansion is achieved, obtaining a crunchy snack in the form of expanded slices.

If said drying process is regulated to obtain dehydrated portions with a water content of 10%, for example, causing a 55% weight reduction, cooking the obtained dehydrated portions in oil at 180°C will cause a 140% expansion, whereas cooking at 200°C causes a 165% expansion, obtaining crunchy snacks in the form of expanded chips.

Thicker portions, for example 1.5 mm or 2 mm thick, will result in less expansion while they are being cooked and therefore a stronger and harder texture. It has also been found that a water content of 10% in the dehydrated portions causes less expansion while they are being cooked than in dehydrated portions with a water percentage of 20%. However, a water percentage greater than 25% would reduce the crunchy texture of the obtained crunchy snack, so it is not advisable.

Cube-shaped, die-shaped, or sphere-shaped portions, or even portions having specific shapes that can be identified by consumers, can be obtained by modifying the shape of the mold and/or the process of cutting. The expansion of said portions while they are being cooked will therefore lead to different crunchy snack shapes.

The flavoring product used in the described examples is pork flour, so the obtained crunchy snack will have a pork rind flavor. As will be evident, replacing said flavoring product with another one, whether it is of animal origin, plant origin or artificial, will not change the essential features of the described examples.

It will be understood that the different parts forming the invention described in one embodiment may be freely combined with the parts described in other different embodiments, even if said combination has not been explicitly described, provided that this combination does not entail a detriment.

## Claims

1. A method for manufacturing lightweight snacks with a crunchy texture including the following steps:
a) mixing a gelatinous coagulating product with at least one flavoring product;
b) inducing coagulation of the gelatinous coagulating product during or after step a), obtaining a coagulated product;
c) shaping portions of said coagulated product that is less than 4 mm thick by means of a process of cutting, rolling out, die-cutting and/or molding said coagulated product;
d) drying said portions, obtaining dehydrated portions;
e) frying the dehydrated portions, obtaining a lightweight snack with a crunchy texture;
**characterized in that** said gelatinous coagulating product is a starch-free product with thermoreversible coagulation properties that can melt at a threshold temperature, said gelatinous coagulating product representing more than half the dry weight of the dehydrated portions before being fried; **in that**
step b) of inducing coagulation is performed by means of controlling the temperature of the mixture; and **in that**
step d) of drying the portions includes the following sub-steps:
• introducing the portions into a treatment unit for treating by means of treated air;
• subjecting said portions to a treated air flow by means of said treatment unit for treating by means of treated air, with the velocity, temperature and humidity thereof controlled for a certain time period until obtaining said dehydrated portions with a pre-established water content, the temperature of the treated air being lower than the threshold temperature at which the gelatinous coagulating product melts.

2. The method according to claim 1, wherein the gelatinous coagulating product is selected from gelatin, protein or collagen.

3. The method according to claim 1 or 2, wherein said pre-established water content of the dehydrated portions is a value comprised between 5% and 25%.

4. The method according to claim 1, 2 or 3, wherein said step e) of frying the dehydrated portions takes place during a cooking time lasting less than 15 seconds, and takes place in oil at a regulated temperature sufficient for causing, in said cooking time, an increase in the volume of the dehydrated portions between 75% and 400%.

5. The method according to claim 4, wherein said cooking takes place at a temperature comprised between 170°C and 210°C.

6. The method according to any one of the preceding claims, wherein the dehydrated portions obtained after step e) are stored at room temperature and hermetically packaged for a time period before performing step e).

7. The method according to any one of the preceding claims, wherein the gelatinous coagulating product and/or the flavoring product are stored, before being mixed, in the form of hermetically packaged dehydrated powder, and the method includes hydrating said powder before, while or after mixing the gelatinous coagulating product and the mentioned at least one flavoring product corresponding to step a) of the method.

8. The method according to any one of the preceding claims, wherein the flavoring product is a natural or artificial product providing one or more flavors selected from: meat, smoked meat, bacon, belly pork, fried pork rind, cheese, fish, surimi, algae, potato, sweet potato, carrot, onion, popcorn, dried fruit and nut, mushroom, salt, spice or condiment flavor.

9. A lightweight snack with a crunchy texture including a mixture of at least one flavoring product with a gelatinous coagulating product, said mixture being in a coagulated and dehydrated state, obtaining dehydrated portions, and then being fried;
**characterized in that**
said gelatinous coagulating product is a starch-free product with thermoreversible coagulation properties that can melt at a threshold temperature, said gelatinous coagulating product representing more than half the dry weight of the dehydrated portions;
said dehydrated portions being obtained through a dehydration process for dehydrating by means of a treated air flow, with the velocity, temperature and humidity thereof controlled for a certain time period until obtaining said dehydrated portions with a pre-established water content, the temperature of the treated air being lower than the threshold temperature at which the gelatinous coagulating product melts.

10. The snack according to claim 9, wherein the gelatinous coagulating product is selected from gelatin, protein or collagen.

11. The snack according to claim 10, wherein said snack is obtained according to the method described in any one of claims 1 to 8 above.

12. Dehydrated portions for obtaining a lightweight snack with a crunchy texture by means of the frying thereof, including a mixture of at least one flavoring product with a gelatinous coagulating product, said mixture being in a coagulated and dehydrated state, obtaining said dehydrated portions;
**characterized in that**
said gelatinous coagulating product is a starch-free product with thermoreversible coagulation properties that can melt at a threshold temperature, said gelatinous coagulating product representing more than half the dry weight of the dehydrated portions;
said dehydrated portions being obtained through a dehydration process for dehydrating by means of a treated air flow, with the velocity, temperature and humidity thereof controlled for a certain time period until obtaining said dehydrated portions with a pre-established water content, the temperature of the treated air being lower than the threshold temperature at which the gelatinous coagulating product melts.

13. Dehydrated portions according to claim 12, wherein the gelatinous coagulating product is selected from gelatin, protein or collagen.

14. Dehydrated portions according to claim 12 or 13, wherein the flavoring product is a natural or artificial product providing one or more flavors selected from: meat, smoked meat, bacon, belly pork, fried pork rind, cheese, fish, surimi, algae, potato, sweet potato, carrot, onion, popcorn, dried fruit and nut, mushroom, salt, spice or condiment flavor.

15. Dehydrated portions according to claim 12, wherein said dehydrated portions are obtained according to the method described in any one of claims 1 to 7 above.
